# FASCICULE DE BREVET EUROPEEN

(11) **EP 0 413 621 B1**
(45) Date de publication et mention de la délivrance du brevet: **21.09.1994**
(21) Numéro de dépôt: 90402214.2
(22) Date de dépôt: 02.08.1990
(51) Int. Cl.: B01D 19/00, A23L 2/32

(54) **Procédé et installation de traitement gazeux d'un produit**
Verfahren und Vorrichtung zur Gasbehandlung eines Produkts
Method and device for the gas treatment of a product

(30) Priorité: 16.08.1989 FR 8910914
(43) Date de publication de la demande: 20.02.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Barbier, François-Xavier, Hinsdale, Illinois 60521 (US)
(74) Mandataire: Le Moenner, Gabriel

(56) Documents cités:
- EP-A- 0 234 771
- DE-A- 3 203 701
- DE-B- 2 214 662
- GB-A- 1 156 417
- US-A- 3 113 871

## Description

L'invention concerne un procédé de traitement gazeux d'un produit dans une zone de traitement confinée.

Un exemple d'un tel traitement est la désoxygénation de liquide alimentaire. En effet, dans ce genre d'applications, la présence d'oxygène limite souvent la durée de conservation des produits, car l'oxygène entraîne soit des phénomènes de fermentation aérobie, soit des phénomènes d'oxydation des composants qui sont à l'origine de l'altération des qualités organoleptiques du produit (arôme, goût). Or, tous les liquides alimentaires contiennent de l'oxygène dissous lorsqu'ils ont été mis en contact avec l'air ambiant, la quantité d'oxygène dissous étant proportionnelle à la pression partielle d'oxygène à la surface du liquide et varie en fonction de la température, de la pression et de la composition du liquide.

Aussi, pour éviter ces phénomènes, on traite les liquides entrant dans les procédés alimentaires et couramment :
- soit par désoxygénation des eaux destinées au coupage de la bière fabriquée par le procédé dit de haute densité,
- soit par désoxygénation des jus de fruit.

La désoxygénation fait généralement appel à l'une des trois techniques suivantes :
- le chauffage
- le vide
- le "stripping" à l'azote ou au gaz carbonique
qui sont utilisées seules ou en combinaison, afin d'atteindre une teneur finale en oxygène dissous inférieure ou égale à 0,05 mg/l à 10°C.

Selon cette technique du "stripping", un gaz inerte de désoxygénation (azote, gaz carbonique) est injecté sous pression au moyen d'injecteurs ou d'éjecteurs dans le liquide à désoxygéner. Le contact gaz inerte/liquide est favorisé soit par une longueur minimale de conduite de contact dans le premier cas, soit par un système Venturi dans le second cas.

L'oxygène est ainsi déplacé par de l'azote ou le gaz carbonique dissous, le mélange O₂ - gaz inerte dégaze lors de la phase de décantation dans une cuve à la pression atmosphérique. Le procédé comprend ainsi une ou deux étapes d'injection permettant d'atteindre la teneur souhaitée d'oxygène dissous de 0,05 mg/l.

La consommation d'azote est dans le cas d'une installation en deux étapes de 3,4 m³ de gaz par m³ de liquide traité pour passer de 10 mg à 0,05 mg d'oxygène dissous par litre de liquide traité.

Bien que le stripage à l'azote donne d'excellents résultats techniques, il est économiquement concurrencé par d'autres techniques et en particulier par la désoxygénation sous vide, car la consommation d'azote est assez élevée.

Le document EP-A-234 771 propose une solution pour l'optimisation d'un procédé de traitement de liquides (désoxygénation) par un gaz de traitement selon lequel le liquide subit plusieurs traitements dans des "zones de traitement" successives, le gaz "contaminé" extrait de chaque zone étant recyclé vers la zone précédente et réutilisé tel que comme gaz de traitement, seul le gaz "contaminé" extrait de la première zone de traitement est épuré thermiquement sur un catalyseur et recyclé vers la dernière zone de traitement.

La présente invention vise un procédé de traitement gazeux d'un produit, du genre rappelé plus haut, qui vise à réduire dans des rapports importants la consommation de gaz inerte et celà par un investissement relativement léger.

La présente invention propose un procédé de traitement gazeux d'un produit, visant à l'élimination d'impuretés telles que, O₂, CO₂, H₂O, dans au moins deux chambres de traitement successives, en utilisant un courant de gaz de traitement à teneur prédominate en gaz inerte, comportant les étapes suivantes :
- on introduit le produit à traiter dans la première chambre de traitement;
- on permet au produit de passer de la première aux chambres suivantes de traitement ;
   caractérisé en ce que
- on introduit un gaz de traitement de haute pureté en gaz inerte dans la dernière chambre de traitement ;
- on évacue en parallèle les gaz de traitement contaminés hors des chambres de traitement ;
- on effectue une étape de purification desdits gaz de traitement contaminés sur un séparateur de type adsorption ou membrane ;
- on recycle le gaz de traitement ainsi épuré à l'entrée de la première chambre de traitement ;
- on effectue un apport compensatoire de gaz de traitement à un endroit choisi du circuit de traitement, la pureté en gaz inerte dudit apport compensatoire étant fonction de l'endroit du circuit choisi pour son injection.

Par gaz de traitement de haute pureté en gaz inerte, on entend selon l'invention, des gaz comprenant un gaz inerte tel l'azote, à une concentration élevée, telle que celle couramment obtenue dans l'azote dit cryogénique. L'expérience a montré que l'utilisation de gaz inerte basse pureté (contenant moins de 1% d'oxygène), en substitution de gaz inerte pur dans la première étape d'une désoxygénation en deux étapes est possible sans entraîner une sur-consommation excessive et on a pu établir que trois volumes de gaz à 99,5 % de gaz inerte tel l'azote par volume de liquide traité permettent d'atteindre une concentration en oxygène dissous de 0,4 mg/l. Une seconde étape de stripage utilisant de l'azote pur tel l'azote dit cryogénique à raison de 1,2 m³ par m³ de liquide traité permet de passer de 0,4 mg/l d'oxygène dissous à 0,05 mg/l, dans le cas de l'application aux liquides alimentaires.

A titre de séparateur de gaz, pour réaliser l'étape d'épuration, on utilise de préférence un générateur à membrane qui permet d'obtenir par exemple à partir d'air un gaz considérablement enrichi en azote à très faible coût, mais avec une teneur en oxygène encore trop élevée (exemple 5 %) pour permettre la réalisation de la première étape de la désoxygénation. Selon l'invention, on produit l'azote basse pureté non pas à partir de l'air extérieur, mais à partir de l'azote basse pureté récupéré en sortie des enceintes de traitement. On élimine alors l'oxygène produit lors du traitement issu du dégazage (par exemple du liquide) par le perméateur à membrane, ainsi qu'une fraction d'azote.

Le recyclage et l'épuration des gaz de traitement contaminés entraînant une perte de gaz, un apport compensatoire en gaz de traitement est effectué.

Selon une forme préférentielle de mise en oeuvre du procédé selon l'invention, tout le gaz issu du traitement subit ladite épuration, tandis que le débit de compensation en gaz de traitement à adjoindre est égal au débit du gaz effluent de ladite séparation à adsorption ou perméation.

Selon un des aspects de l'invention, on adapte la pureté du gaz inerte de l'apport compensatoire en gaz de traitement, selon l'endroit du circuit où cet apport est effectué :
- on utilise préférentiellement un gaz de haute pureté en gaz inerte pour un apport effectué dans la dernière chambre de traitement ;
- si l'apport compensatoire est adjoint au gaz contaminé en recyclage, en amont de l'étape d'épuration on utilise ici avantageusement un gaz de basse ou moyenne pureté en gaz inerte tel qu'obtenu par perméation ou adsorption. La concentration résiduel d'oxygène de ce gaz basse ou moyenne pureté en gaz inerte pourra alors atteindre 10 %. L'apport compensatoire effectué en amont de l'étape d'épuration pourra aussi selon une autre forme de mise en oeuvre de l'invention, être constitué d'air,
- pour un apport compensatoire de gaz de traitement effectué en aval de l'étape d'épuration, entre l'étape d'épuration et la première chambre de traitement, on utilisera avantageusement un gaz de pureté en gaz inerte supérieure à celle du gaz issu du traitement avant épuration.

Selon une variante de mise en oeuvre, l'apport compensatoire est pour partie du gaz inerte à haute pureté adjoint au débit de gaz de traitement injecté dans la dernière chambre de traitement, et pour partie du gaz inerte à basse pureté ou moyenne pureté adjoint au gaz de recyclage en amont de l'épuration par séparation par adsorption ou perméation.

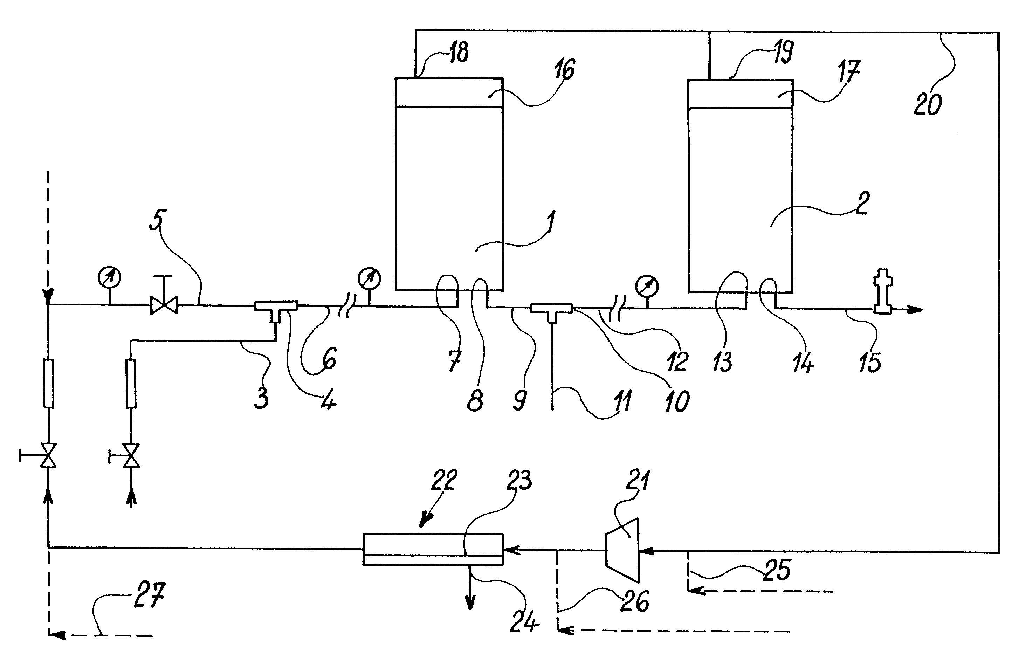

L'invention vise en particulier, mais non exclusivement, l'application de ce procédé à la désoxygénation de liquide (voir revendication 12), en particulier de liquides alimentaires. Mais l'invention s'applique également à toutes sortes de traitements mettant en oeuvre un gaz inerte qui, au cours du traitement, s'enrichit en impuretés soustraites de la zone confinée de traitement, en particulier fours de traitement thermique, enceintes de stockage de pièces électroniques, ou chambres de conservation sous atmosphère contrôlée de végétaux, etc... d'où un gaz indésirable et/ou polluant, tel l'oxygène par exemple, doit être constamment soustrait.
L'invention est maintenant décrite à titre illustratif en référence au dessin annexé, qui décrit une installation de désoxygénation de liquide alimentaire.

Cette installation de désoxygénation de liquide alimentaire comprend deux enceintes de traitement, ou cuves de débullage ou décantation 1 et 2 présentant un circuit d'alimentation en liquide 3 débouchant dans un mélangeur gaz-liquide 4, lui-même alimenté en azote épuré par une conduite 5, le mélange gaz-liquide circulant dans une conduite 6 avant d'être injecté par un orifice 7 au fond de la cuve de décantation amont 1. L'admission du mélange gaz-liquide peut également se faire en une zone haute, par exemple au travers du couvercle, en dirigeant le jet admis vers le bas. De la cuve 1, le liquide est soutiré par un orifice 8 vers une conduite 9 aboutissant à un second mélangeur gaz-liquide 10 qui reçoit par une conduite 11 de l'azote à haute pureté. Le mélange gaz/liquide est acheminé par une conduite 12 pour pénétrer par un orifice 13 au fond de la seconde cuve de décantation 2 (ou au sommet de ladite cuve 2). Le liquide finalement traité est soutiré par un orifice de fond de cuve 14 vers une conduite de soutirage final 15 du liquide désoxygéné.

Dans l'une et l'autre cuve 1 et 2, les gaz qui se dégagent sont collectés en tête 16 et 17 et évacués par des orifices 18 et 19 vers un collecteur de soutirage gazeux 20 qui aboutit à l'admission d'un compresseur 21 d'alimentation d'un séparateur gazeux 22 du type à membrane 23 délivrant un gaz à environ 99,5 % d'azote, alors que le gaz collecté en tête 16 et 17 des cuves 1 et 2 comprenait des impuretés de dégazage oxygène, gaz carbonique et vapeur d'eau à teneur d'environ 1 % à 5 %, la teneur en impuretés déterminant le degré de pureté du gaz inerte. Ces impuretés sont substantiellement éliminées en 24 sous forme d'effluents gazeux du côté aval de la membrane 23 du perméateur 22.

Le débit d'appoint de compensation peut être assuré totalement par l'injection d'azote pur en 11 dans le mélangeur 10. Il peut être en partie ou en totalité assuré par une injection de gaz à teneur prédominante en azote avec cependant des impuretés en quantités non négligeables, de 5 % à 10 % d'oxygène et même plus (azote basse pureté produit par un perméateur ou un adsorbeur) et, à la limite, on peut se contenter d'admettre un débit - qui reste faible - d'air. Selon la pression disponible, ce gaz à basse pureté d'azote est introduit en 25 dans le collecteur basse pression 20 d'alimentation du compresseur 21, ou en 26 à la sortie du compresseur 21, mais en amont du séparateur 22.

Si le gaz de compensation à teneur prédominante en gaz inerte est du gaz inerte à basse pureté inférieure à celle du gaz issu du traitement, il est adjoint en 25, 26 au gaz de recyclage avant séparation des impuretés par adsorption ou perméation. Si, au contraire le gaz de compensation à teneur prédominante en gaz inerte est à moyenne pureté, supérieure à celle du gaz issu du traitement, il est adjoint en 27 au gaz de recyclage après séparation des impuretés par adsorption ou perméation.

Dans le cas d'utilisation d'air, le débit d'air entrant dans le perméateur est adapté de façon à obtenir le ratio : débit d'azote basse pureté/débit d'azote pur, correspondant aux besoins de la désoxygénation en deux étapes pour assurer l'équilibrage du système.

Cet équilibrage du système est obtenu en suralimentant le générateur à membrane. L'intérêt de la suralimentation est d'agmenter fortement le taux de récupération du générateur (débit d'azote basse pureté/débit d'air entrant) mais au détriment de la pureté. En couplant suralimentation et recirculation, on obtient à la fois des taux de récupération et des puretés élevés.

### EXEMPLE

Un système de désoxygénation de 50 m³/h de liquide contenant 10 mg/l d'oxygène, et, à l'équilibre, on a relevé les valeurs suivantes :

| | débit | pureté de l'azote |
|---|---|---|
| . entrée perméateur (22) | 200 m³/h | 99,6 % |
| . sortie perméateur (22) (ou entrée 1er mélangeur 4) | 150 m³/h | 99,8 % |
| . azote pur, à l'entrée second mélangeur (10) | 50 m³/h | 100 % |

Grâce au système décrit, on obtient non seulement de l'azote plus économique que l'azote issu de perméation classique (pour un coût d'exploitation multiplié par 1,5, la production est multipliée par 4) mais aussi un niveau de pureté nettement plus élevé (0,4 - 0,5 % d'oxygène) autorisant son utilisation directe dans la première étape de la désoxygénation.

## Revendications

1. Procédé de traitement gazeux d'un produit, visant à l'élimination d'impuretés telles que O₂, H₂O, CO₂, dans au moins deux chambres de traitement successives, en utilisant un courant de gaz de traitement à teneur prédominante en gaz inerte, comportant les étapes suivantes :
- on introduit le produit à traiter dans la première chambre de traitement;
- on permet au produit de passer de la première aux chambres suivantes de traitement ;
caractérisé en ce que
- on introduit un gaz de traitement de haute pureté en gaz inerte dans la dernière chambre de traitement ;
- on évacue en parallèle les gaz de traitement contaminés hors des chambres de traitement ;
- on effectue une étape d'épuration desdits gaz de traitement contaminés, sur un séparateur de type adsorption ou membrane;
- on recycle le gaz de traitement ainsi épuré à l'entrée de la première chambre de traitement;
- on effectue un apport compensatoire de gaz de traitement à un endroit choisi du circuit de traitement, la pureté en gaz inerte dudit apport compensatoire étant fonction de l'endroit du circuit choisi pour son injection.

2. Procédé selon la revendication 1 caractérisé en ce que le gaz de traitement de haute pureté en gaz inerte est obtenu à partir d'une source cryogénique.

3. Procédé selon l'une des revendications 1 et 2 caractérisé en ce que l'apport compensatoire de gaz de traitement est adjoint au courant de gaz de traitement contaminé, en amont de l'étape d'épuration.

4. Procédé selon l'une des revendications 1 et 2 caractérisé en ce que l'apport compensatoire de gaz de traitement est adjoint au gaz de traitement en aval de l'étape d'épuration, mais en amont de la première chambre de traitement.

5. Procédé selon la revendication 3, caractérisé en ce que le gaz constituant l'apport compensatoire est un gaz de basse pureté en gaz inerte, tel qu'obtenu par perméation ou adsorption.

6. Procédé selon la revendication 5 caractérisé en ce que le gaz constituant l'apport compensatoire comprend une concentration résiduelle d'oxygène pouvant atteindre 10 %.

7. Procédé selon la revendication 3, caractérisé en ce que le gaz constituant l'apport compensatoire est de l'air.

8. Procédé selon la revendication 4 caractérisé en ce que le gaz constituant l'apport compensatoire est de pureté en gaz inerte supérieure à celle du gaz issu du traitement, avant épuration.

9. Procédé selon l'une des revendications 1 et 2 caractérisé en ce que l'apport compensatoire de gaz de traitement est du gaz de haute pureté en gaz inerte, adjoint au gaz de traitement injecté dans la dernière chambre de traitement.

10. Procédé selon l'une des revendications 1 à 9 caractérisé en ce que le produit à traiter est un liquide, et le gaz de traitement est mis en contact avec le liquide avant leur introduction dans chaque chambre de traitement.

11. Procédé selon la revendication 10 caractérisé en ce que le mélange liquide/gaz est admis dans chaque chambre de traitement par le bas de la chambre, et le gaz de traitement contaminé est évacué par le haut de chaque chambre de traitement.

12. Procédé de traitement d'un produit liquide dans au moins deux chambres de traitement successives, en utilisant un courant de gaz de traitement à teneur prédominante en gaz inerte comportant les étapes suivantes :
- on prémélange le gaz de traitement et le produit liquide dans un mélangeur ;
- le mélange est envoyé dans la première chambre de traitement ;
- le produit liquide est transféré de la première aux chambres suivantes de traitement ;
caractérisé en ce que
- du gaz de traitement de haute pureté en gaz inerte est adjoint au produit liquide dans la dernière chambre de traitement ;
- le produit liquide traité est évacué de la dernière chambre de traitement :
- les gaz de traitement contaminés sont évacués en parallèle des chambres de traitement, et sont dirigés le long d'une boucle d'épuration vers le mélangeur produit liquide/gaz de traitement ;
- la boucle d'épuration comprend un séparateur de type membrane ou adsorption ;
- on introduit dans la boucle d'épuration un apport compensatoire de gaz de traitement, non contaminé de basse ou moyenne pureté en gaz inerte.

## Claims

1. Process for the gaseous treatment of a product, aimed at eliminating impurities such as O₂, H₂, CO₂, in at least two successive treatment chambers, using a flow of treatment gas consisting predominantly of inert gas, including the following steps:
- the product to be treated is introduced into the first treatment chamber;
- the product is allowed to pass from the first to the following treatment chambers;
characterised in that
- a treatment gas with a high inert-gas purity is introduced into the last treatment chamber;
- at the same time the contaminated treatment gases are discharged from the treatment chambers;
- a stage of purification of the said contaminated treatment gases is carried out on a separator of the adsorption or membrane type;
- the treatment gas thus purified is recirculated to the inlet of the first treatment chamber;
- a compensatory addition of treatment gas is effected at a chosen point in the treatment circuit, the inert-gas purity of the said compensatory addition being a function of the position in the circuit chosen for its admission.

2. Process according to Claim 1, characterised in that the treatment gas with a high inert-gas purity is obtained from a cryogenic source.

3. Process according to one of Claims 1 and 2, characterised in that the compensatory addition of treatment gas is added to the flow of contaminated treatment gas, upstream of the purification stage.

4. Process according to one of Claims 1 and 2, characterised in that the compensatory addition of treatment gas is added to the treatment gas downstream of the purification stage but upstream of the first treatment chamber.

5. Process according to Claim 3, characterised in that the gas constituting the compensatory addition is a gas with a low inert-gas purity, as obtained by permeation or adsorption.

6. Process according to Claim 5, characterised in that the gas constituting the compensatory addition comprises a residual concentration of oxygen which may be as much as 10%.

7. Process according to Claim 3, characterised in that the gas constituting the compensatory addition is air.

8. Process according to Claim 4, characterised in that the gas constituting the compensatory addition has an inert-gas purity greater than that of the gas coming from the treatment, before purification.

9. Process according to one of Claims 1 and 2, characterised in that the compensatory addition of treatment gas is gas with a high inert-gas purity, added to the treatment gas admitted into the last treatment chamber.

10. Process according to one of Claims 1 to 9, characterised in that the product to be treated is a liquid, and the treatment gas is brought into contact with the liquid before they are introduced into each treatment chamber.

11. Process according to Claim 10, characterised in that the liquid/gas mixture is admitted into each treatment chamber through the bottom of the chamber, and the contaminated treatment gas is discharged at the top of each treatment chamber.

12. Process for treating a liquid product in at least two successive treatment chambers, using a flow of treatment gas consisting predominantly of inert gas, including the following steps:
- the treatment gas and the liquid product are premixed in a mixer;
- the mixture is sent into the first treatment chamber;
- the liquid product is transferred from the first to the following treatment chambers;
characterised in that
- treatment gas with a high inert-gas purity is added to the liquid product in the last treatment chamber;
- the treated liquid product is discharged from the last treatment chamber;
- the contaminated treatment gases are discharged at the same time from the treatment chambers and are directed along a purification loop to the liquid product/treatment gas mixer;
- the purification loop comprises a separator of the membrane or adsorption type;
- a compensatory addition of uncontaminated treatment gas with a low or medium inert-gas purity is introduced into the purification loop.

## Patentansprüche

1. Verfahren zur Gasbehandlung eines Produkts zur Entfernung von Verunreinigungen wie beispielsweise O₂, H₂O, CO₂ in zumindest zwei aufeinanderfolgenden Behandlungskammern unter Verwendung eines Behandlungsgasstroms mit einem überwiegenden Gehalt an inertem Gas, umfassend die folgenden Schritte:
- Einführen des zu behandelnden Produkts in die erste Behandlungskammer;
- Durchtreten lassen des Produkts von der ersten Kammer in die nachfolgenden Kammern;
gekennzeichnet durch
- Einleiten eines Behandlungsgases mit hohem Inertgasgehalt in die erste Behandlungskammer,
- paralleles Abziehen der kontaminierten Behandlungsgase aus den Behandlungskammern;
- Durchführen eines Schritts zur Reinigung der kontaminierten Behandlungsgase in einer Adsorptions- oder Membrantrenneinrichtung;
- Zurückführen des derart gereinigten Behandlungsgases zum Einlaß der ersten Behandlungskammer;
- Bewirken einer Behandlungsgas-Kompensationszufuhr zu einem gewählten Ort des Behandlungskreislaufes, wobei der Inertgasgehalt der Kompensationszufuhr eine Funktion des gewählten Orts des Kreislaufs ist.

2. Verfahren nach Anspruch 1, dadurch gekennzeichnet, daß das hochreine Behandlungsgas mit hohem Inertgasgehalt aus einer Tiefkühlquelle bezogen wird.

3. Verfahren nach Anspruch 1 oder 2, dadurch gekennzeichnet, daß die Behandlungsgas-Kompensationszufuhr zum kontaminierten Behandlungsgasstrom vor dem Reinigungsschritt erfolgt.

4. Verfahren nach Anspruch 1 oder 2, dadurch gekennzeichnet, daß die Behandlungsgas-Kompensationszufuhr zum Behandlungsgas nach dem Reinigungsschritt, jedoch stromauf von der ersten Behandlungskammer erfolgt.

5. Verfahren nach Anspruch 3, dadurch gekennzeichnet, daß das Kompensationszufuhrgas ein Gas mit niedrigem Inertgasgehalt ist, wie beispielsweise ein Gas, das durch Permeation oder Adsorption erhalten wird.

6. Verfahren nach Anspruch 5, dadurch gekennzeichnet, daß das Kompensationszufuhrgas eine Sauerstoffrestkonzentration von bis zu 10% haben kann.

7. Verfahren nach Anspruch 3, dadurch gekennzeichnet, daß das Kompensationszufuhrgas Luft ist.

8. Verfahren nach Anspruch 4, dadurch gekennzeichnet, daß das Kompensationszufuhrgas einen Inertgasgehalt hat, der höher ist als derjenige des aus der Behandlung abgeleiteten Gases vor dem Reinigungsschritt.

9. Verfahren nach Anspruch 1 oder 2, dadurch gekennzeichnet, daß das Kompensationszufuhr-Behandlungsgas ein Gas mit hohem Inertgasgehalt ist, das dem in die letzte Behandlungskammer eingeleiteten Behandlungsgas zugemischt wird.

10. Verfahren nach einem der Ansprüche 1 bis 9, dadurch gekennzeichnet, daß das zu behandelnde Produkt eine Flüssigkeit ist, und daß das Behandlungsgas in Kontakt mit der Flüssigkeit gebracht wird, bevor diese in jede Behandlungskammer eingeführt werden.

11. Verfahren nach Anspruch 10, dadurch gekennzeichnet, daß das Flüssigkeits-/Gasgemisch in jeder Behandlungskammer vom Boden der Kammer eingelassen wird, und daß das kontaminierte Behandlungsgas aus dem oberen Bereich jeder Behandlungskammer abgezogen wird.

12. Verfahren zur Behandlung eines flüssigen Produkts in zumindest zwei aufeinanderfolgenden Behandlungskammern unter Verwendung eines Behandlungsgases mit einem überwiegenden Inertgasgehalt, umfassend folgende Schritte:
- Vormischen des Behandlungsgases und des flüssigen Produkts in einem Mischer;
- Einleiten des Gemisches in die erste Behandlungskammer;
- Überführen des flüssigen Produkts von der ersten in die nachfolgenden Behandlungskammern;
gekennzeichnet durch
- Zumischen des Behandlungsgases mit hohem Inertgasgehalt zum flüssigen Produkt in der ersten Behandlungskammer;
- Abziehen des behandelten flüssigen Produkts aus der letzten Behandlungskammer;
- paralleles Abziehen der kontaminierten Behandlungsgase aus den Behandlungskammern und Leiten dieses Behandlungsgases entlang einem Reinigungsumlaufsystem zum Flüssigprodukt-/Behandlungsgasmischer;
- wobei das Reinigungsumlaufsystem eine Membran- oder Adsorptionszerlegungseinrichtung umfaßt;
- Einleiten eines nicht kontaminierten Kompensationszufuhr-Behandlungsgases mit niedrigem oder mittlerem Inertgasgehalt in das Reinigungsumlaufsystem.
